# EUROPEAN PATENT APPLICATION

(11) **EP 2 712 279 A2**
(43) Date of publication of application: **26.03.2014**
(21) Application number: 13158751.1
(22) Date of filing: 12.03.2013
(51) Int. Cl.: H05B 37/02

(54) **Lighting control system**

(30) Priority: 21.08.2012 JP 2012182404; 31.01.2013 JP 2013016705
(71) Applicant: Toshiba Lighting & Technology Corporation, Yokosuka-shi Kanagawa 237-8510 (JP)
(72) Inventor: Nishigaki, Hidenori, Kanagawa, 237-8510 (JP); Takahashi, Kenji, Kanagawa, 237-8510 (JP); Takahashi, Junko, Kanagawa, 237-8510 (JP); Kawano, Hitoshi, Kanagawa, 237-8510 (JP); Kumashiro, Shinichi, Kanagawa, 237-8510 (JP)
(74) Representative: Bokinge, Ole

(57) **Abstract**

A lighting control system (1, 1A, 10) according to the embodiment includes a plurality of lighting fixtures (4), a lighting control unit (2, 2A), and an access point (5). The plurality of lighting fixtures (4) are arranged in a lighting area. The lighting control unit (2, 2A) is configured so as to control the lighting fixture (4). The access point (5) transmits a layout chart of a different lighting area depending on an installation position of the access point.

## Description

### FIELD

Embodiments described herein relate generally to a lighting control system.

### BACKGROUND

A lighting control system is known which is able to display a layout chart on a setter, and allocate terminal information on a lighting fixture or the like to a control point which is arranged on the layout chart.

In addition, a lighting control system is known in which an illuminance sensor is installed on a ceiling, and illuminance of lighting is controlled according to detected illuminance.

However, when a plurality of control points are present on the layout chart, and when there are a plurality of layout charts which are different depending on the number of floors of a building, operations become complicated.

### DESCRIPTION OF THE DRAWINGS

FIG. 1 is a diagram which illustrates an example of a configuration of a lighting control system according to a first embodiment.
FIG. 2 is figure of data which illustrates a relationship between an access point and a layout chart.
FIG. 3 is a layout chart according to the first embodiment.
FIG. 4 is a different layout chart according to the first embodiment.
FIG. 5 is a diagram which illustrates an example of a flow of processing of the lighting control system according to the first embodiment.
FIG. 6 is a diagram which illustrates an example of a flow of setting processing of a control target in a setting mode according to the first embodiment.
FIG. 7 is a diagram which illustrates an example of a flow of lighting control processing in a control mode according to the first embodiment.
FIG. 8 is a layout chart which illustrates consumed power in each division area according to the first embodiment.
FIG. 9 is a diagram which illustrates an example of a configuration of a lighting control system according to a second embodiment.
FIG. 10 is a diagram which illustrates an example of a flow of illuminance control processing according to the second embodiment.
FIG. 11 is a layout chart which illustrates target illuminance in each division area according to the second embodiment.
FIG. 12 is a diagram which illustrates an example of a configuration of a lighting control system according to a third embodiment.

### DETAILED DESCRIPTION

A lighting control system according to embodiments includes a plurality of lighting fixtures, a lighting control unit, and access points. The plurality of lighting fixtures are installed in a lighting area. The lighting control unit is configured so as to control the lighting fixtures. The access point transmits a layout chart of a lighting area which becomes different depending on an installation position of the access point.

Hereinafter, the lighting control system according to the embodiments will be described with reference to drawings. In the embodiments, the same portions will be given the same reference numerals, and repeated descriptions will be omitted.

### First Embodiment

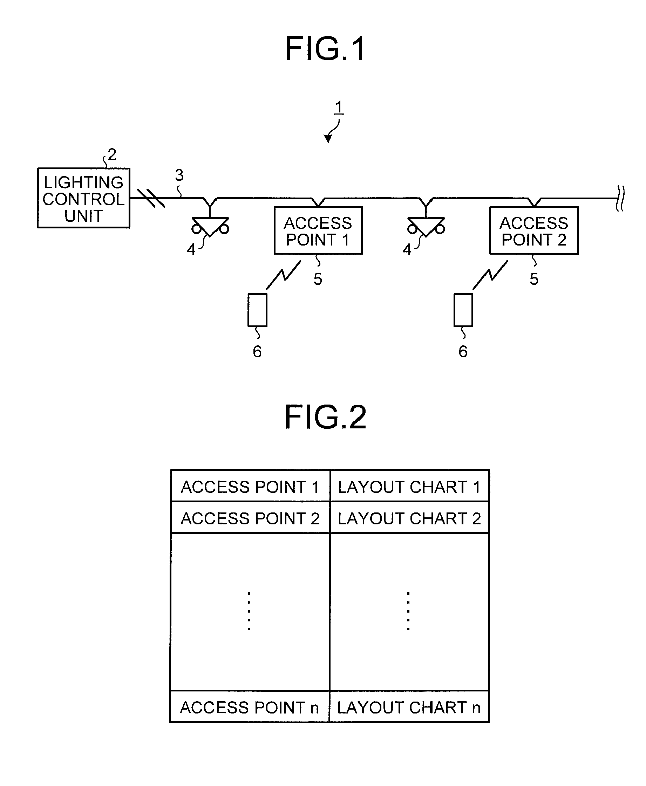

Hereinafter, a first embodiment will be described with reference to FIGS. 1 to 8. In addition, in each figure, the same portions will be given the same reference numerals, and repeated descriptions will be omitted.

FIG. 1 is a diagram which illustrates an example of a configuration of a lighting control system according to the first embodiment.

A lighting control system 1 which is illustrated in FIG. 1 includes a lighting control unit 2 which remotely controls a lighting fixture 4 which is installed in each lighting area such as each floor, or each area of, for example, an office building, and various facilities.

The lighting control unit 2 is connected with the lighting fixtures 4, and access points 5 according to the first embodiment through two transmission lines 3 (hereinafter, referred to as transmission line).

The lighting control unit 2 performs controls of a group control of integrally controlling the plurality of lighting fixtures 4, an individual control of controlling the lighting fixture 4 individually, a schedule control of controlling according to a time, a control depending on various sensor data such as a human detection sensor, or a brightness sensor, or the like. In addition, the lighting control unit 2 stores and manages setting information which denotes a relationship between each lighting fixture 4 and a control ID, or group information, control information, such as, ON, OFF, or the like of each lighting fixture 4, fixture information of each lighting fixture such as an accumulation lighting time of a lighting fixture, consumed power, light distribution, light output, light color, or the like. That is, the lighting control unit 2 performs an overall control and monitoring of the system.

The plurality of lighting fixtures 4 are set with individual IDs, respectively, and are controlled by the lighting control unit 2 through the transmission line 3. In addition, it is also possible to control the lighting fixture 4 using a wall switch (not shown) which is connected to the transmission line 3, a sensor terminal, a control terminal, a relay terminal, or the like.

The access point 5 communicates with the lighting control unit 2 by being connected to the transmission line 3. In addition, the access point 5 is configured so as to wirelessly communicate with a mobile terminal 6. The access point 5 receives an information request from the mobile terminal 6, and transmits a layout chart of a lighting area to the mobile terminal 6 according to the information request from the mobile terminal 6. In addition, the access point 5 is installed, for example, on a ceiling of a lighting area, a wall face, or the like. The access point 5 may be configured in a single body, or integrally configured with another instrument which is connected to the lighting fixture 4 or the lighting control system 1.

The mobile terminal 6 is a terminal which is configured so as to communicate with the access point 5 by including a display screen, an input unit, a calculation unit, or the like. As the mobile terminal 6, it is possible to use an electronic apparatus, for example, a mobile phone, a smart phone, a PDA (Personal Digital Assistant), a personal computer, or the like.

FIG. 2 is figure of data which illustrates a correlation between an access point and a layout chart. In other words, in each access point, a layout chart corresponding thereto is set. For example, when an office is divided into a plurality of partitions, and an access point is installed in each partition, a layout chart corresponding to the installed partition is set in each access point. In addition, when an access point is installed on each floor of an office, a layout chart on each floor may be set corresponding to the access point which is installed on the floor. That is, a layout chart of a lighting area which is different depending on a set position of the access point is stored. In addition, it is also possible to set the same layout chart in different access points.

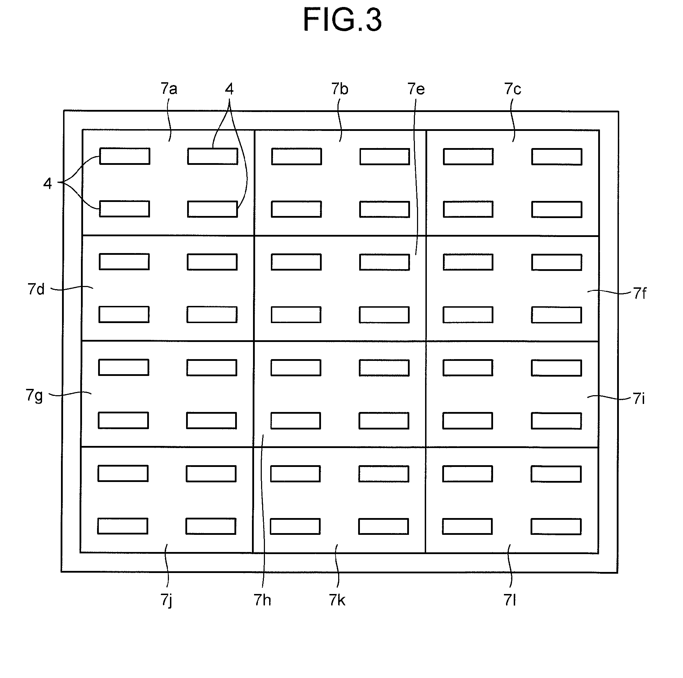

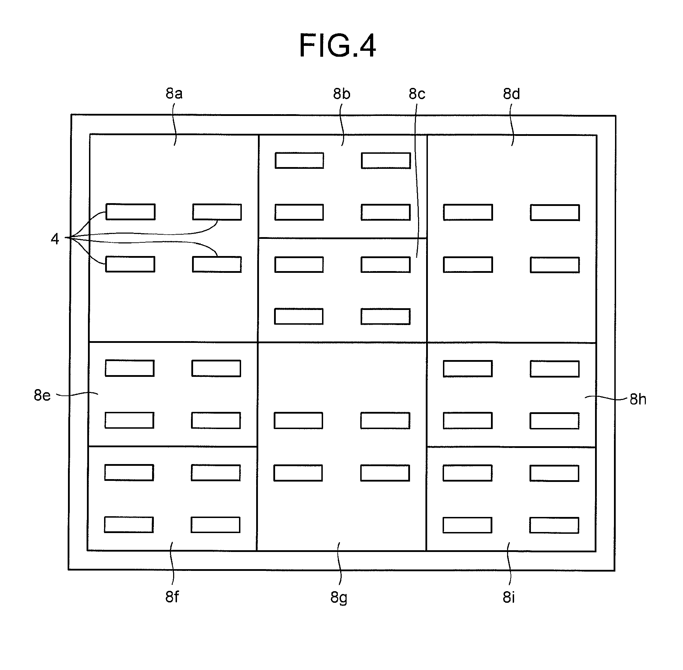

FIGS. 3 and 4 are examples of layout charts, and FIG. 3 and FIG. 4 illustrate layout charts in different lighting areas. For example, FIG. 3 illustrates a layout chart of a first floor in an office building, and FIG. 4 illustrates a layout chart on another floor of the same office building.

In the layout chart which is illustrated in FIG. 3, 48 lighting fixtures 4 are installed, and 12 division areas 7a to 71 in total are set by setting a region in which four lighting fixtures 4 are installed as one division area, respectively.

In the layout chart which is illustrated in FIG. 4, 36 lighting fixtures 4 are installed, and 9 division areas 8a to 8i in total are set by setting a region in which four lighting fixtures 4 are installed as one division area, respectively.

According to the first embodiment, such a layout chart, and data which denotes a relationship between an access point and the layout chart are stored in a storage unit of the lighting control unit 2, for example.

Subsequently, flow of processing according to the first embodiment will be described.

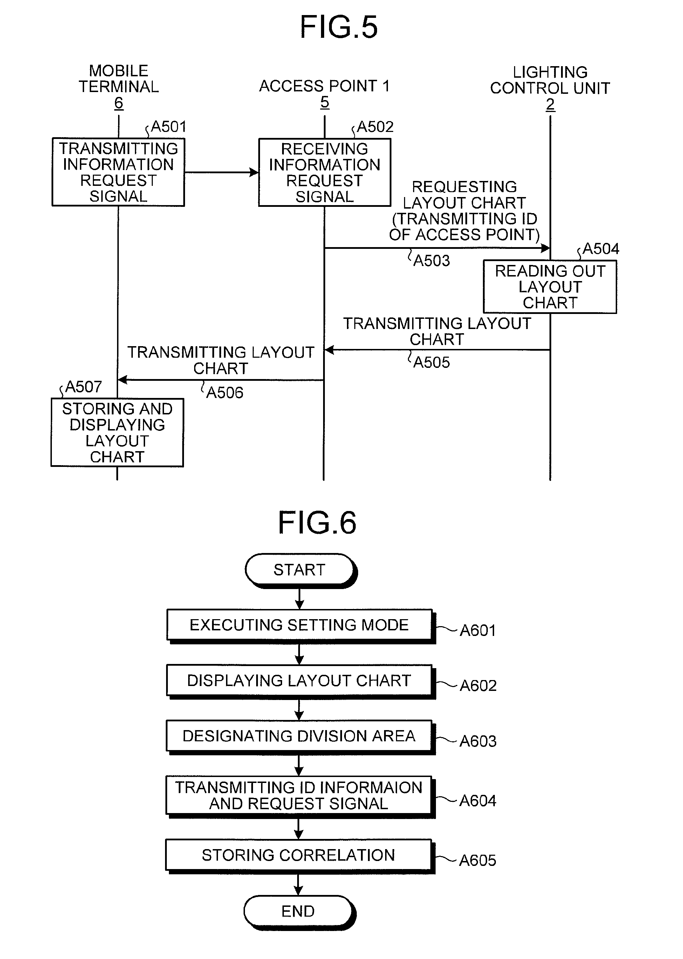

FIG. 5 is a diagram which illustrates an example of a flow of processing in the lighting control system 1 according to the first embodiment. A process of obtaining a layout chart using the mobile terminal 6 will be described with reference to FIG. 5.

First, a user transmits an information request signal which requests transmitting of a layout chart with respect to the access point 5 using a mobile phone as the mobile terminal 6 which can communicate with the access point 5 (ACT A501). Here, a case in which the mobile terminal 6 transmits the information request signal to the "access point 1" will be described. The "access point 1" which received the information request signal (ACT A502) requests a layout chart with respect to the lighting control unit 2 through the transmission line 3 (ACT A503). At this time, the "access point 1" transmits an ID for identifying itself, that is, data denoting "access point 1" at the same time. The lighting control unit 2 which received the request reads out data of a "layout chart 1" corresponding to the "access point 1" from a figure of data which is illustrated in FIG. 2, and is stored in itself (ACT A504), and transmits the "layout chart 1" to the "access point 1" (ACT A505). The "access point 1" which received the data relating to the "layout chart 1" wirelessly transmits the data of "layout chart 1" to the mobile terminal 6 (ACT A506). The mobile terminal 6 stores the received "layout chart 1", and appropriately displays it (ACT A507).

On the other hand, when the mobile terminal 6 transmits an information request signal to an "access point 2", it is possible to receive a "layout chart 2" according to the above described procedure.

In this manner, a user is able to obtain a layout chart corresponding to the access point 5 according to the access point 5 which transmits an information request signal.

That is, in an office building, for example, when a layout chart of a certain floor is necessary, it is possible to easily obtain only a necessary layout chart by causing the access point 5 which is installed on the floor and a layout chart of the floor to correspond to each other.

Subsequently, methods of setting and controlling using the mobile terminal 6 which stores a layout chart will be described.

The mobile terminal 6 is installed with software relating to a lighting control in advance, and it is possible to execute a setting mode for setting the lighting fixture 4 which can be controlled using the mobile terminal 6, and a control mode for controlling the set lighting fixture 4 using the software.

FIG. 6 is a diagram which illustrates an example of a flow of setting processing of a control target in the setting mode according to the first embodiment. The flow of processing in the setting mode will be described with reference to FIG. 6.

In a layout chart which is stored in the mobile terminal 6, a division area is set in which at least one lighting fixture 4 is allocated; and four lighting fixtures are allocated in the first embodiment. First, a user executes a setting mode using software which is installed in the mobile terminal 6 (ACT A601). In addition, the user displays a layout chart on the mobile terminal 6 (ACT A602). The user designates a division area which is set as a control target by the mobile terminal 6 on the displayed layout chart (ACT A603). For example, when the division area 7a is designated as a control target, the mobile terminal 6 transmits a request signal for setting the division area 7a to be controlled by the mobile terminal 6 to the lighting control unit 2 through the access point 5, along with ID information (for example, a phone number, or an identification number of a terminal) which is necessary for identifying the mobile terminal 6 (ACT A604). In response to the request signal, the lighting control unit 2 stores the ID information of the mobile terminal 6 and the division area 7a by correlating the two with each other, so that the division area 7a can be controlled by the mobile terminal 6 (ACT A605). In this manner, the division area 7a of the "layout chart 1" is in a state of being controlled by the mobile terminal 6. That is, the ID information of the mobile terminal 6 and the division area 7a are stored in the lighting control unit 2 as a mobile terminal and a division area having a correlation. When the correlation is stored, the mobile terminal 6 is able to control the lighting fixture 4 in the correlated division area 7a. When the correlation is not stored, the mobile terminal 6 is not able to control the lighting fixture 4 in the division area 7a.

In the first embodiment, the lighting control unit 2 is able to store only one piece of ID information with respect to one division area as information of a device which can control the lighting fixture 4 in the division area. Since one division area can be controlled only by one mobile terminal 6, in this case, it is possible to prevent misuse by another person.

In addition, when only one mobile terminal 6 is allowed to be correlated with each division area, information indicating which division area has already been correlated with the ID information of the mobile terminal 6 may be transmitted along with a layout chart, when the lighting control unit 2 transmits the layout chart. Then, a fact denoting that setting of ID information correlated with a division area is finished, and is not possible may be displayed together with the layout chart on the mobile terminal 6.

Alternatively, more than one pieces of ID information may be stored in correlation with one division area. In this case, the user can operate the lighting control system 1 more conveniently, since more than one user can control the lighting fixture 4. Further, the order of priority may be set in the plurality of pieces of ID information, and a control by the mobile terminal 6 having ID information with a higher priority may be reflected by having the top priority. In this manner, it is possible to regulate a control by an individual, and to prevent a useless use of the lighting fixture 4.

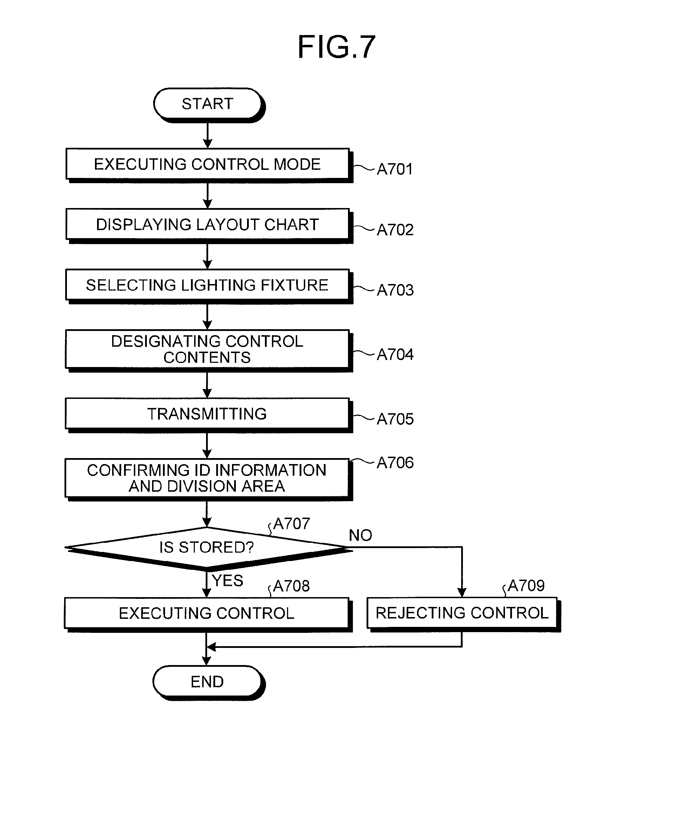

Subsequently, a flow of lighting control processing in a control mode of the mobile terminal 6 will be described with reference to FIG. 7. FIG. 7 is a diagram which illustrates an example of a flow of the lighting control processing in the control mode according to the first embodiment.

In the control mode by the software which is installed in the mobile terminal 6, a lighting fixture 4 in a target division area is controlled using a layout chart which is displayed on the mobile terminal 6, or a control screen. Specifically, a control signal including ID information of the mobile terminal 6 and a division area to be controlled is transmitted to the lighting control unit 2 through the access point 5, and the lighting control unit 2 which receives the control signal controls the lighting fixture in the division area when the ID information and the division area are stored as having a correlation.

First, a user executes the control mode (ACT A701). In addition, the user displays the layout chart on the mobile terminal 6 (ACT A702). In addition, the user selects a lighting fixture 4 to be controlled on the displayed layout chart (ACT A703). Further, the user designates contents to be controlled (ACT A704). For example, the user designates increasing or decreasing of illuminance, OFF, or ON of the lighting fixture 4, or the like. It may be configured such that a drop-down menu or the like is displayed on the mobile terminal 6, and the user can select contents to be controlled among the menus.

Subsequently, the user transmits selected information of the lighting fixture 4, and the designated contents to be controlled to the lighting control unit 2 through the access point 5 (ACT A705). At this time, the ID information of the mobile terminal 6 is also automatically transmitted. The lighting control unit 2 which receives the information confirms whether or not the transmitted information of the lighting fixture 4 (division area) and the ID information of the mobile terminal 6 are stored as having a correlation (ACT A706). When the correlation is stored (YES in ACT A707), the lighting control unit 2 executes the designated contents to be controlled (ACT A708). When the correlation is not stored (NO in ACT A707), the lighting control unit 2 rejects the designated contents to be controlled without executing the contents (ACT A709). At this time, the lighting control unit 2 may transmit a signal informing whether or not the contents to be controlled are executed to the mobile terminal 6. In this manner, the lighting control processing from the mobile terminal 6 is finished.

Subsequently, a method of confirming, and comparing power data of the lighting fixture 4 which is installed in a lighting area using the mobile terminal 6 will be described.

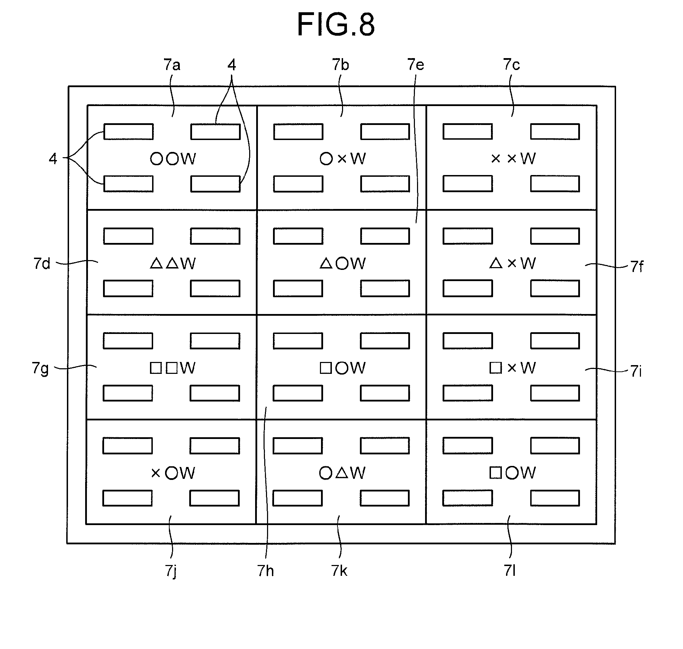

The lighting control unit 2 stores power data such as consumed power, amount of power consumption, or the like by each lighting fixture 4, transmits the power data and the layout chart according to a request from the mobile terminal 6, and in the mobile terminal 6, it is possible to display a diagram denoting the consumed power on the layout chart, as illustrated in FIG. 8, for example. FIG. 8 is a layout chart which denotes consumed power in each division area according to the first embodiment. Here, for example, a division area with 0 W denotes that the lighting fixture 4 in this division area is turned off, and differences in consumed power are changed according to differences in the degree of dimming of the lighting fixture 4, for example. Due to this, it is possible for the user of the mobile terminal 6 to understand an amount of consumed power in a division area, and to compare the consumed power in other division areas. Due to this, it is possible to raise consciousness in energy saving. In addition, it is possible to easily recognize a division area in which consumed power is relatively high, or low, and for example, to enhance awareness of energy consumption and to prompt the user to install a lighting fixture with high efficiency or the like in a place where power consumption is usually high.

In addition, as the power data, quantity of power saving, an electricity cut rate, or the like which denotes how much consumed power is cut in comparison with a state of full lighting by dimming or the like, for example, may also be displayed, not the consumed power itself.

In addition, a reference value relating to the quantity of power saving, or the consumed power is set in the lighting control unit 2, and when the quantity of power saving, or the consumed power is lower than a certain reference value, a message denoting the fact may be transmitted to the mobile terminal 6, and saving a more than necessary power may be prevented.

### Second Embodiment

Subsequently, a second embodiment will be described. In the second embodiment, illuminance of a lighting fixture is detected using an illuminance sensor which is provided in a mobile phone, and a feedback control is performed so as to obtain target illuminance.

Controlling illuminance by providing an illuminance sensor on a ceiling can be taken into consideration, as well. However, it is not possible to control so that illuminance at an arbitrary place becomes a target illuminance using an illuminance sensor which is fixed onto a ceiling. Therefore, according to the second embodiment, it is configured such that an adjustment of illuminance at an arbitrary place can be performed when a user moves with a mobile phone by providing an illuminance sensor in the mobile phone.

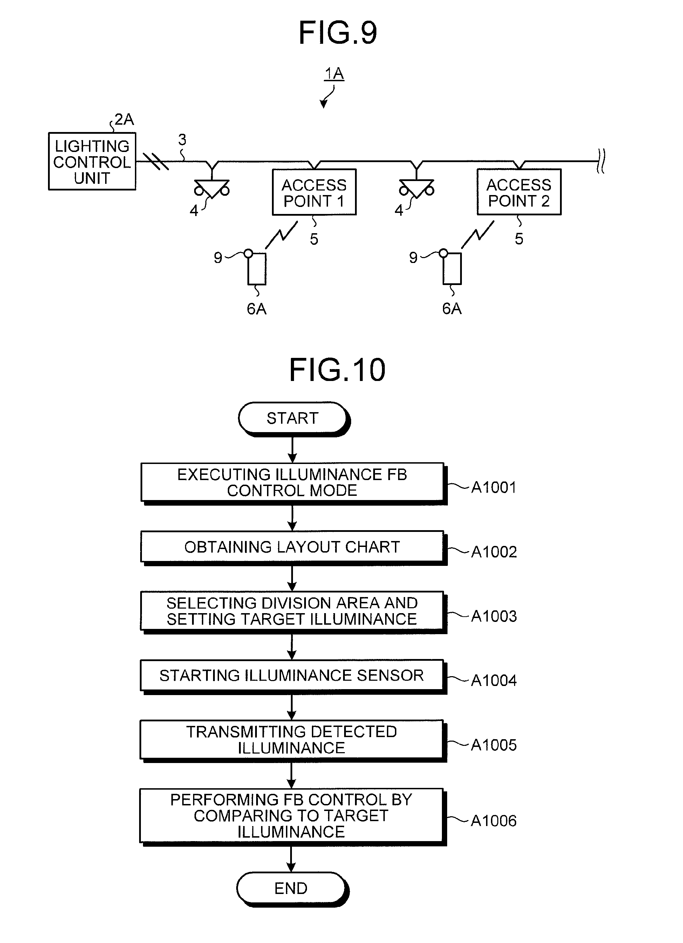

The second embodiment will be described with reference to FIG. 9. FIG. 9 is a diagram which illustrates an example of a configuration of a lighting control system 1A according to the second embodiment. As illustrated in FIG. 9, in the lighting control system 1A according to the second embodiment, a mobile terminal 6A includes an illuminance sensor 9. Other configurations than that are the same as those in the lighting control system 1 according to the first embodiment. Hereinafter, functions and configurations which are different from those in the first embodiment will be described, and common functions and configurations are given the same reference numerals, and detailed descriptions thereof will be omitted.

In the lighting control system 1A which is illustrated in FIG. 9, a user goes to a division area to be controlled by carrying the mobile terminal 6A, and is able to measure illuminance in the area using the illuminance sensor 9 which is included in the mobile terminal 6A. The illuminance which is detected by the illuminance sensor 9 is transmitted to a lighting control unit 2A through the access point 5. The lighting control unit 2A compares target illuminance which is set in advance to the detected illuminance, and controls a lighting fixture 4 so that the target illuminance is obtained.

An example of flow of illuminance control processing according to the second embodiment will be described with reference to FIG. 10. FIG. 10 is a diagram which illustrates an example of the flow of illuminance control processing according to the second embodiment. First, a user executes an illuminance FB (feedback) control mode using software which is installed in the mobile terminal 6A (ACT A1001). In addition, the user obtains a layout chart of a place where a feedback control is desired using the mobile terminal 6A (ACT A1002). Obtainment of the layout chart is performed similarly to the first embodiment. The user selects a division area as a control target by displaying the layout chart on the mobile terminal 6A, and sets a target illuminance (ACT A1003). The processing is also the same as that in the first embodiment.

Subsequently, the user carries the mobile terminal 6A to a place where illuminance is desired to be controlled, and starts up the illuminance sensor 9 of the mobile terminal 6A (ACT A1004). In addition, the illuminance sensor 9 may be a sensor which is automatically started up at a point of time when the illuminance FB mode is executed. The illuminance sensor 9 detects illuminance of the place, and the detected illuminance is transmitted to the lighting control unit 2A from the mobile terminal 6A through the access point 5 (Act A1005). The lighting control unit 2A compares a set target illuminance to the detected illuminance, and performs a feedback control so that the detected illuminance is close to the target illuminance (ACT A1006). In this manner, the processing is finished.

In addition, information on the target illuminance is stored in the mobile terminal 6A, and when the detected illuminance is approximately the same as the target illuminance, the processing may be finished without transmitting the information to the lighting control unit 2A. In addition, it may be set such that the feedback control is started when the lighting control unit 2A receives the illuminance, the feedback control is stopped when the illuminance is not received for a certain time, and a usual control, that is, for example, a lighting control using a degree of dimming which is set in advance is performed.

In addition, it may be configured such that the user performs the processing without selecting the lighting fixture 4 as a control target. For example, it may be a configuration in which a present position of the mobile terminal 6A is transmitted to the lighting control unit 2A from the mobile terminal 6A, the lighting fixture 4 which influences illuminance of the mobile terminal 6A at the present position is selected by the lighting control unit 2A, and the illuminance is adjusted. In this case, the lighting fixture 4 as the control target may be one, or be a plurality of lighting fixtures. In addition, it may be a configuration in which the user selects a specified position on the layout chart, a target illuminance is set in the position, and then the detected illuminance is compared to the target illuminance, thereby performing a feedback control.

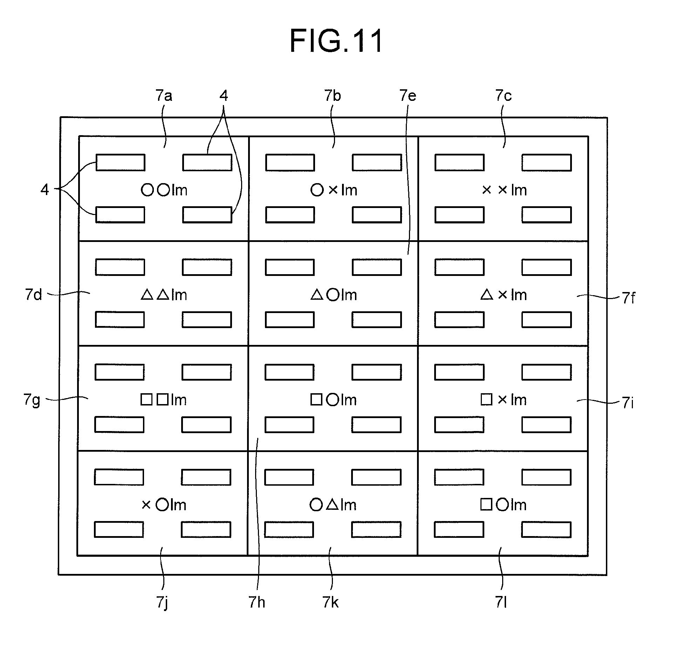

In addition, as illustrated in FIG. 11, a target illuminance may be displayed on a layout chart with respect to a division area of which target illuminance is set. FIG. 11 is a layout chart on which target illuminance in each division area according to the second embodiment is denoted. In addition, the target illuminance, and measured illuminance which is measured by the illuminance sensor 9 may be displayed in line on the layout chart while the illuminance FB control mode is executed. In addition, it may be a configuration in which measured illuminance which is displayed is changed according to a change in the illuminance which is detected by the illuminance sensor 9.

### Third Embodiment

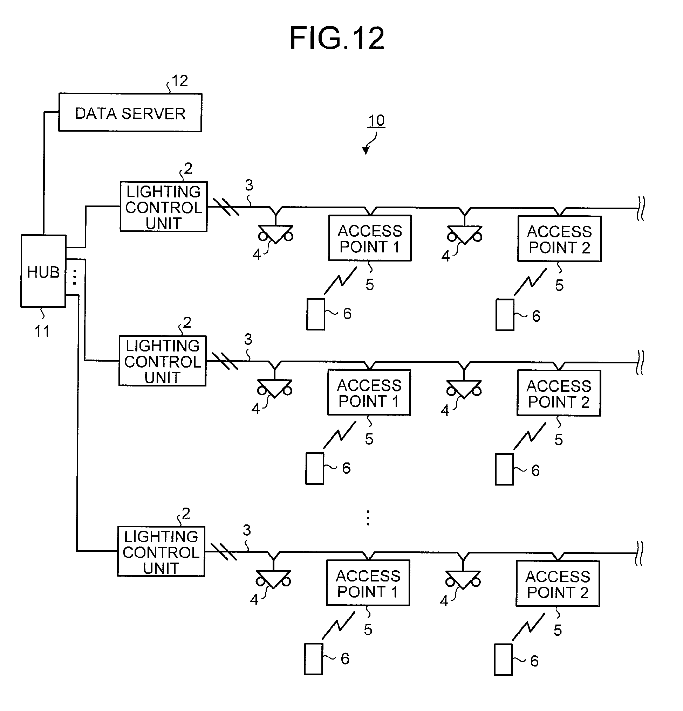

Subsequently, a third embodiment will be described with reference to FIG. 12. FIG. 12 is a diagram which illustrates an example of a configuration of a lighting control system 10 according to the third embodiment. The lighting control system 10 which is illustrated in FIG. 12 is different from those in the first and second embodiments in that a plurality of lighting control units 2 are connected to a data server 12 through a hub 11. Since the lighting control unit 2, the transmission line 3, the lighting fixtures 4, access points 5, and mobile terminal 6 in the third embodiment are the same as those in the lighting control system 1 which is illustrated in FIG. 1, the same configurations are given the same reference numerals, and detailed descriptions thereof will be omitted.

The data server 12 is, for example, a managing server which manages a load control unit in the entire office building, and at least performs collecting, storing, or managing of power data of the load control unit. In the load control unit, a device which uses electricity is included in addition to a lighting fixture, an air-conditioner, and an elevator. Power data relating to the lighting fixture 4 is collected from the lighting control unit 2, and power data excepting for the lighting fixture is obtained from another control unit, and is managed.

The data server 12 monitors power consumption of the load control unit which is managed by itself, and when power data of other than the lighting fixture 4 exceeds a certain reference, for example, when power consumption exceeds a predetermined value, the fact that the power consumption exceeds the predetermined value is transmitted to the lighting control unit 2. The lighting control unit 2 transmits the fact to the mobile terminal 6 through the access point 5 which is connected through the transmission line 3. In this manner, a user who owns the mobile terminal 6 is able to easily recognize that amount of power consumption in the office building is a reference value or more.

In addition, the lighting control unit 2 which was informed of a fact that the power data exceeds a certain reference, limits a control by the mobile terminal 6. For example, the control by the mobile terminal 6 is set to an impossible state, or a direct control by the lighting control unit 2 is given priority. In this manner, it is possible to realize a control state in which a control by an individual is regulated, and power consumption is suppressed. For example, a lighting control using an energy saving mode in which unnecessary lighting is turned off, or dimmed by the lighting control unit 2 may be performed.

In addition, exemplary embodiments are not limited to the configurations of the above described embodiments, and it is possible to perform various modifications without departing from the scope of the invention. In addition, the above described embodiments are merely examples, and are not limiting the scope of the invention.

For example, in the above described embodiment, a case is described in which the layout chart is stored in the lighting control units 2, and 2A, however, it may be a configuration in which the data server 12, or the access point 5 stores the layout chart.

In addition, in the above described embodiment, it is configured such that the data server 12 is connected through the hub 11, however, the lighting control unit 2 and the data server 12 may be directly connected, and it may be a configuration in which the lighting control unit 2 has the same function as that in the data server 12.

As described above, the lighting control system according to the embodiments having the above described configuration includes the plurality of lighting fixtures which are installed in a lighting area, the lighting control unit which is configured so as to control the lighting fixture, and the access point which transmits a layout chart of a different lighting area depending on an installation position of the access point. For this reason, it is possible to provide a lighting control system which is able to transmit a layout chart of a different lighting area to a mobile terminal depending on an installation position of an access point.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. A lighting control system (1, 1A, 10) comprising:
a plurality of lighting fixtures (4) which are installed in a lighting area;
a lighting control unit (2, 2A) which is configured so as to control the lighting fixture; and
an access point (5) which transmits a layout chart of a lighting area which becomes different depending on an installation position of the access point.

2. The system according to claim 1,
wherein the access point (5) receives an information request from a mobile terminal (6), and transmits the layout chart to the mobile terminal (6) according to the information request.

3. The system according to claim 2,
wherein the layout chart can be set such that a division area (71-71, 8a-8i) in which at least one of the lighting fixtures (4) is allocated is set, and a control of the lighting fixture (4) using the mobile terminal (6) can be performed in each division area.

4. The system according to claim 3,
wherein, the lighting control unit (2) further includes a storage unit which stores identification information and a predetermined division area in correlation with each other, when receiving the identification information for identifying the mobile terminal (6), and a request signal which sets the predetermined division area to be controllable.

5. The system according to claim 4,
wherein, when a control signal is received from a mobile terminal (6), and when identification information of the mobile terminal which is included in the control signal, and a division area as a control target are stored in the storage unit as identification information and a division area in a correlation, the lighting control unit (2) executes a control based on the control signal.

6. The system according to claim 4 or 5,
wherein the storage unit which is included in the lighting control unit (2) stores identification information for identifying one, or a plurality of mobile terminals by correlating with a division area.

7. The system according to claim 6,
wherein the access point (5) transmits information which denotes a division area for which correlated identification information has been stored, along with the layout chart.

8. The system according to any one of claims 3 to 7,
wherein power data of a lighting fixture (4) in an arbitrary division area can be confirmed by a mobile terminal (6).

9. The system according to any one of claims 3 to 7,
wherein power data of a lighting fixture (4) in each division area can be compared to one another.

10. The system according to claim 8 or 9,
wherein, when the power data is lower than a predetermined reference value, the lighting control unit (2) informs the mobile terminal (6) of the fact.

11. The system (10) according to any one of claims 3 to 10, further comprising:
a data server (12) which manages power data other than power data of a lighting fixture (4),
wherein, when the power data exceeds a certain reference, a lighting control by a mobile terminal (6) is limited.

12. The system (10) according to any one of claims 1 to 11, further comprising:
the data server (12) which manages power data other than power data of a lighting fixture (4),
wherein, when the power data exceeds a certain reference, a mobile terminal (6) is informed of the fact.

13. The system (1A) according to any one of claims 2 to 12,
wherein the lighting control unit (2A) receives setting of target illuminance on a predetermined place on the layout chart from the mobile terminal (6A).

14. The system (1A) according to claim 13,
wherein the lighting control unit (2A) receives measured illuminance at the predetermined place which is detected by an illuminance sensor (9) which is included in the mobile terminal (6A), performs a feedback control with respect to a lighting fixture (4) in the vicinity of the predetermined place among the plurality of lighting fixtures (4), and the measured illuminance of the predetermined place is set to the target illuminance.

15. The system (1A) according to claim 14,
wherein the lighting control unit (2A) starts a feedback control of the lighting fixture (4) when receiving measured illuminance of the predetermined place which is detected by the illuminance sensor (9) which is included in the mobile terminal (6A), and stops the feedback control of the lighting fixture (4) when not receiving the measured illuminance for a predetermined time.
